# EUROPÄISCHE PATENTANMELDUNG

(11) **EP 3 035 046 A1**
(43) Veröffentlichungstag der Anmeldung: **22.06.2016**
(21) Anmeldenummer: 14199254.5
(22) Anmeldetag: 19.12.2014
(51) Int. Cl.: G01N 27/49, G01N 30/64, G01N 30/88

(54) **Verfahren zur Bestimmung eines Dialkyldisulfids**

(71) Anmelder: Evonik Degussa GmbH, 45128 Essen (DE)
(72) Erfinder: Jakob, Harald, 63594 Hasselroth (DE); Fonfe, Benjamin, 60318 Frankfurt (DE); Fuss, Sebastian, 36103 Flieden (DE); Dörflein, Andreas, 63538 Großkrotzenburg (DE); Held, Markus, 63694 Limeshain (DE); Dürr, Nadine, 64665 Alsbach (DE)

(57) **Zusammenfassung**

Die vorliegende Erfindung betrifft ein Verfahren zur Bestimmung eines Dialkyldisulfids, umfassend die Schritte Durchführen einer chromatographischen Trennung eines Analyten, der mindestens ein Dialkyldisulfid und eine Alkansulfonsäure enthält, und Bestimmen des Dialkyldisulfids mittels gepulster amperometrischer Detektion.

## Beschreibung

Die vorliegende Erfindung betrifft ein Verfahren zur Bestimmung eines Dialkyldisulfids in einer Alkansulfonsäure enthaltenden Lösung.

Dialkyldisulfide, teils auch Disulfane genannt, sind organische kovalente Disulfide der allgemeinen Formel R¹-S-S-R², wobei R¹ und R² jeweils einen Alkylrest bedeuten. Bei sogenannten symmetrischen Disulfiden sind R¹ und R² identisch, während bei sogenannten unsymmetrischen Disulfiden der organische Rest R¹ vom anderen Rest R² verschieden ist. Der einfachste Vertreter dieser Stoffklasse ist das Dimethyldisulfid H₃C-S-S-CH₃, welches durch Reaktion von Methanthiol mit elementarem Schwefel hergestellt werden kann. Verwendung findet Dimethyldisulfid unter anderem in Ölraffinerien als Sulfidierungsmittel und in der petrochemischen Industrie als Hilfsstoff beim Cracken von Erdöl. Darüber hinaus gewinnen Dialkyldisulfide im Allgemeinen und insbesondere Dimethyldisulfid zunehmende Bedeutung für die Herstellung von Alkansulfonsäuren, insbesondere von Methansulfonsäure.

Alkansulfonsäuren sind die organischen Derivate der Schwefelsäure, von der sie sich strukturell durch den Ersatz einer Hydroxyl-Gruppe durch einen organischen Rest unterscheiden. Die allgemeine Strukturformel der Alkansulfonsäuren lautet daher R-SO₃-H, wobei R einen organischen Rest bezeichnet, beispielsweise Alkyl oder Aryl. In Abhängigkeit dieses organischen Rests wird zwischen aliphatischen, aromatischen oder heterocyclischen Sulfonsäuren unterschieden. Die freien Sulfonsäuren sind in der Regel farblose und hygroskopische Substanzen deren Säurestärke denen der anorganischen Säuren entspricht. Mit einem pKₛ-Wert von -5,5 ist Trifluormethansulfonsäure sogar eine der stärksten bekannten Säuren und gehört daher zur Gruppe der sogenannten Supersäuren. Im Gegensatz zu den Sulfatsalzen von Quecksilber, Blei und Silber sind die entsprechenden Sulfonate sehr gut wasserlöslich.

Der einfachste Vertreter der Alkansulfonsäuren ist die Methansulfonsäure, die gewöhnlich auch als MSA abgekürzt wird, in Anlehnung an ihren englischsprachigen Namen methanesulfonic acid. Gleichzeitig ist Methansulfonsäure auf Grund ihrer vielfältigen Verwendungsmöglichkeiten auch die wirtschaftlich wichtigste Alkansulfonsäure. So dient Methansulfonsäure beispielsweise als Lösungsmittel und Katalysator für verschiedene organische Reaktionen wie zum Beispiel Alkylierungen, Veresterungen, Polymerisationen oder Heterocyclensynthesen. Ein weiteres Anwendungswendungsgebiet ist die Bildung von Säure-Additionssalzen von basischen Arzneimitteln mit Methansulfonsäure in der Humanmedizin. Daneben findet Methansulfonsäure zunehmend Verwendung als Bestandteil von Reinigern, da sie auf Grund ihrer Farb- und Geruchslosigkeit leicht in Reinigungslösungen integriert werden kann. Aus industrieller Sicht am bedeutendsten sind die Metallsalze der Methansulfonsäure, welche als Elektrolyten in methansulfonsauren Galvanisierbädern, insbesondere zur Herstellung von Leiterplatten für die Elektronikindustrie, Verwendung finden. Ein weiteres neues Anwendungsgebiet für Methansulfonsäure ist das sogenannte oil drilling: Die durch Bohrlöcher erschlossenen Erdöl führenden Schichten setzen das Öl häufig nicht oder nur in begrenztem Maße frei. Zur verbesserten Freigabe des Öls werden daher die Öl enthaltenden Gesteinsschichten mit Methansulfonsäure aufgeweicht.

Alkansulfonsäuren sind durch Oxidation von Mercaptanen und/oder Dialkyldisulfiden bzw. Polysulfiden erhältlich. Verfahren zur Herstellung von Alkansulfonsäuren sind aus den Offenlegungsschriften WO 98/34914 A1, WO 00/31027 A1 und CN 101648892 A sowie den Patenten US 2,433,395, US 2,433,396, US 2,502,618, US 2,498,318, US 2,505,910, US 2,697,722, US 2,727,920 bekannt. Generell ist im industriellen Maßstab die Herstellung von Alkansulfonsäuren aus Dialkyldisulfiden bevorzugt.

Zur Ermittlung der Prozessparameter, die eine möglichst vollständige Umsetzung des Dialkyldisulfids zur entsprechenden Alkansulfonsäure erlauben, bedarf es daher einer zuverlässigen Bestimmung des Dialkyldisulfids. Eine für diesen Zweck geeignete Bestimmungsmethode sollte auch dann eine möglichst genaue Bestimmung erlauben, wenn die Alkansulfonsäure im Überschuss gegenüber dem Dialkyldisulfid vorliegt. Typischerweise ist dies dann der Fall, wenn die Alkansulfonsäure, die das Produkt der Oxidation des Dialkyldisulfids darstellt, auch als Lösungsmittel dieser Reaktion eingesetzt wird, wie in der PCT/CN2013/089136 beschrieben.

Für diese Anwendung erweisen sich die bekannten Analysenmethoden jedoch entweder als untauglich oder zumindest nicht ausreichend tauglich. Beispielsweise sind mit der NMR-Analytik (nuclear magnetic resonance, Kernspinresonanz) - unabhängig von der zu bestimmenden Substanz und der betreffenden Matrix - nur Nachweisgrenzen von ca. 0,1 Gew.-% (Gewichtsprozent) realisierbar. Diese Nachweisgrenze ist jedoch für die Anwendung zur Bestimmung von Dialkyldisulfiden in Alkansulfonsäuren zu hoch. Ein weiterer Nachteil der Kernspinresonanz besteht darin, dass NMR-Spektrometer hochkomplizierte, kostenintensive und wartungsintensive Analysengeräte sind, deren Einsatz in unmittelbarer Nähe zu einer Produktionsanlage nicht praktikabel ist. Die NIR-Analytik (near infrared, Nahinfrarot-Spektroskopie) unterliegt denselben Limitierungen, was die Nachweisgrenze betrifft. Ein zusätzlicher Nachteil dieser Methode ist, dass sie außerdem eine ausreichend genaue Validierungsmethode zur Kalibrierung benötigt. Auch die UV-Spektroskopie (ultraviolet) führt für die der vorliegenden Erfindung zugrundeliegenden Anwendung nicht zu befriedigenden Ergebnissen. Beispielsweise erlaubt die Verwendung eines Hochleistungsflüssigkeits-Chromatographen (HPLC, high performance liquid chromatograph) mit einem UV-Detektor die Bestimmung von Dimethyldisulfid nur mit einem Fehler von ungefähr 10% bei 1 Gewichts-% Dimethyldisulfid. Auch die Analyse mittels der sogenannten Headspace-Gaschromatographie (GC, gas chromatography), bei welcher nur der Dampfraum über der Probe analysiert wird, wodurch der Analyst kaum beeinflusst wird, eignet sich nicht für die vorliegende Anwendung. Denn diese Methode erlaubt lediglich bei synthetischen Proben gute Ergebnisse, führt aber bei der Bestimmung von Dialkyldisulfiden in einer Realprobenmatrix nur zu unbefriedigenden Ergebnissen.

Auch bei einem Wechsel von der Hochleistungsflüssigkeits-Chromatographie zur lonenchromatographie (IC, ion chromatography) werden keine Verbesserungen erzielt, denn Dialkyldisulfide wie Dimethyldisulfid lassen sich mit einem UV-Detektor nicht mit der erforderlichen Genauigkeit bestimmen. Dies trifft auch für die Verwendung eines Leitfähigkeitsdetektors und eines Brechungsindex-Detektors zur Bestimmung von Dimethyldisulfid zu.

Es bestand daher ein Bedarf an einer Methode zur Bestimmung eines Dialkyldisulfids in einer Alkansulfonsäure mit einer niedrigen Nachweisgrenze.

Erfindungsgemäß wird diese Aufgabe durch Kombination eines chromatographischen Trennverfahrens mit einer gepulsten amperometrischen Detektion gelöst.

Gegenstand der vorliegenden Erfindung ist daher ein Verfahren zur Bestimmung eines Dialkyldisulfids, umfassend die Schritte
a) Durchführen einer chromatographischen Trennung eines Analyten, der mindestens ein Dialkyldisulfid und eine Alkansulfonsäure enthält, und
b) Bestimmen des Dialkyldisulfids mittels gepulster amperometrischer Detektion.

Um das Dialkyldisulfid zuverlässig bestimmen zu können, muss der Analyst mit dem zu bestimmenden Dialkyldisulfid einer Aufbereitung unterworfen werden. Dies erfolgt im Rahmen der vorliegenden Erfindung durch eine chromatographische Trennung, bei welcher der zu untersuchende Analyt zusammen mit einem Laufmittel, der sogenannten mobilen Phase (auch Elutionsmitttel oder Eluent genannt) durch eine sogenannte Trennsäure geleitet wird, welche die stationäre Phase enthält.

Die Detektion des von der Trennsäule eluierten Dialkyldisulfids erfolgt mit Hilfe der sogenannten gepulsten amperometrischen Detektion. Die amperometrische Detektion bzw. Amperometrie ist eine elektrochemische Methode zur quantitativen Bestimmung von chemischen Verbindungen. Grundvoraussetzung für die Anwendbarkeit der Amperometrie ist, dass die zu bestimmenden chemischen Verbindungen leicht oxidierbare oder reduzierbare Substanzen sind. Der Aufbau der Detektorzelle in welcher die Messung stattfindet beruht auf einer sogenannten potentiostatischen Messanordnung, und daher besitzt eine entsprechende Detektorzelle drei Elektroden: eine Arbeitselektrode, die zur Verfolgung der elektrochemischen Vorgänge dient, eine Hilfselektrode, die den Strom aus der Oxidation bzw. Reduktion transportiert, und eine Referenzelektrode, die hochohmig geschaltet ist und somit für eine gleichmäßige Spannung an der Arbeitselektrode sorgt; der Stromfluss wird somit zwischen Arbeits- und Hilfselektrode gemessen. Liegt an der Arbeitselektrode das für eine Oxidation oder Reduktion der betreffenden organischen Verbindung erforderliche Potential an, wird als Folge dieser elektrochemischen Reaktion ein Signalstrom gemessen. Der gemessene Elektrolysestrom wird anschließend verstärkt und als Funktion der Zeit in einem Chromatogram dargestellt. Da der Elektrolysestrom direkt proportional ist zur Konzentration der in der Elektrolysereaktion umgesetzten organischen Verbindungen, erlaubt die amperometrische Detektion die Bestimmung unbekannter Konzentrationen einer spezifischen organischen Verbindung mit Hilfe einer zuvor erstellten Kalibrierfunktion. Im Rahmen der vorliegenden Erfindung wird eine amperometrische Detektion, bei der nur das für die Durchführung der Elektrolysereaktion der organischen Verbindung erforderliche Potential an die Arbeitselektrode angelegt wird, als amperometrische Detektion bei konstantem Potential bezeichnet.

Für die der vorliegenden Erfindung zugrundeliegenden Aufgabestellung hat sich allerdings gezeigt, dass eine amperometrische Bestimmung bei konstantem Potential noch keine reproduzierbaren Ergebnisse für die Bestimmung eines Dialkyldisulfids in einer Alkansulfonsäure erlaubt: in der Regel ist der bei einer Wiederholung einer vorangegangenen Messung ermittelte Wert für den Elektrolysestrom deutlich niedriger als bei der ersten Messung, beispielsweise kann der Messwert über einen Zeitraum von einer Stunde um über 20% abnehmen. Zurückgeführt wird dies zum einen auf die (teilweise) Belegung der Arbeitselektrode mit mindestens einem Absorbat und auf das Auftreten kapazitiver Ströme. Bei dem mindestens einen Adsorbat kann es sich um ein Produkt der elektrochemischen Reaktion, die an der Arbeitselektrode stattgefunden hat, handeln. Das Auftreten kapazitiver Ströme wird vermutlich dadurch hervorgerufen, dass die Ausbildung einer Diffusionsschicht an der Arbeitselektrode bzw. ihre Ausbreitung in die Lösung hinein behindert wird, was auf die Umverteilung von elektroaktiven Spezies in der Detektorzelle auf Grund typischer Konvektionsvorgänge zurückgeführt wird.

Erfindungsgemäß werden Genauigkeit und Reproduzierbarkeit der amperometrischen Detektion dadurch erzielt, indem sie gepulst wird. Im Rahmen der vorliegenden Erfindung wird unter einer sogenannten gepulsten amperometrischen Detektion eine amperometrische Detektion verstanden, bei der die an der Arbeitselektrode zur Durchführung der Elektrolyse anliegende Spannung in periodischen Zeitabständen durch mindestens einen rechteckigen Puls überlagert wird. Bei diesem rechteckigen Puls kann es sich sowohl um eine anodisches als auch ein kathodisches Potential sowie eine Mischung aus beidem handeln. Durch diese Technik wird die Arbeitselektrode nicht nur von den an ihrer Oberfläche haftenden Adsorbaten gesäubert, sondern sie wird auch für die nächsten Bestimmungen konditioniert. Diese Konditionierung verbessert die Ausbildung der Diffusionsschicht an der Arbeitselektrode bzw. deren Ausbreitung in die Lösung hinein, was ebenfalls zu einer erheblichen Verbesserung der Genauigkeit und Reproduzierbarkeit der gepulsten amperometrischen Detektion gegenüber einer "einfachen" amperometrischen Detektion bei konstanter Spannung beiträgt.

Üblicherweise ist der bei einer gepulsten amperometrischen Detektion gemessene Elektrolysestrom nicht für alle Dialkyldisulfide gleich, sondern hängt neben der Konzentration des jeweiligen Dialkyldisulfids auch noch von seinem strukturellen Aufbau ab. Vor der Bestimmung einer unbekannten Menge eines bestimmten Dialkyldisulfids wird daher typischerweise zunächst der Elektrolysestrom für Lösungen unterschiedlicher Konzentrationen desselben, also des zu bestimmenden, Dialkyldisulifds gemessen. Aus diesen Messwerten wird eine Kalibrierfunktion erstellt, in welcher der gemessene Elektrolysestrom mit der Konzentration des Dialkyldisulfids korreliert wird. Anschließend wird für eine Probe mit einer unbekannten Konzentration des Dialkyldisulfids für das eine entsprechende Kalibrierfunktion erstellt wurde der Elektrolysestrom mittels gepulster amperometrischer Detektion gemessen. Durch Vergleich mit dieser für ein spezifische Dialkyldisulfid erstellten Kalibrierfunktion kann anhand des gemessenen Elektrolysestroms die Konzentration dieses Dialkyldisulfids in der betreffenden Probe ermittelt werden.

In einer Ausführungsform des erfindungsgemäßen Verfahrens umfasst der Schritt Bestimmen des Dialkyldisulfids mittels gepulster amperometrischer Detektion daher die Einzelschritte
b1) Messen des Elektrolysestroms für das Dialkyldisulfid mittels gepulster amperometrischer Detektion, und
b2) Ermitteln der Menge und/oder der Konzentration des zu bestimmenden Dialkyldisulfids durch Vergleich mit einer zuvor für das zu bestimmende Dialkyldisulfid erstellten Kalibrierfunktion.

Ein notwendiges Kriterium, damit eine Schwefel enthaltende organische Verbindung wie ein Dialkyldisulfid mit Hilfe der amperometrischen Detektion bestimmt werden kann, ist das Vorliegen von mindestens einem freien Elektronenpaar am Schwefelatom. Denn nur Verbindungen mit einem freien Elektronenpaar können an Elektrodenoberflächen adsorbiert werden und sind daher elektroaktive Spezies. Im Gegensatz dazu stellen organische Verbindungen ohne freie Elektronenpaare nicht-elektroaktive Spezies dar. Denn diese Verbindungen können auf Grund fehlender Elektronenpaare nicht an Elektrodenoberflächen adsorbiert und daher auch nicht mittels amperometrischer Detektion bestimmt werden.

In einer weiteren Ausführungsform des erfindungsgemäßen Verfahrens wird daher die gepulste amperometrische Detektion im oxidativen Modus durchgeführt.

Die Durchführung der gepulsten amperometrischen Detektion im oxidativen Modus zur Bestimmung von Dialkyldisulfid hat den Vorteil, dass das betreffende, an der Elektrodenoberfläche adsorbierte Dialkyldisulfid zu Verbindungen oxidiert wird, die nicht elektroaktiv sind. Diese oxidierte Spezies werden daher auch nicht an der Elektrodenoberfläche adsorbiert und beeinflussen nicht direkt die laufende Messung noch spätere Messungen. Dies trägt zur Genauigkeit des erfindungsgemäßen Verfahrens bei. Im Rahmen der vorliegenden Erfindung wird daher unter einer gepulsten amperometrischen Detektion im oxidativen Modus grundsätzlich eine Detektion verstanden, bei der die an der Elektrodenoberfläche adsorbierte Komponente Dialkyldisulfid entweder vollständig oder zumindest nahezu vollständig in oxidierte Spezies, wie beispielweise R¹-SO₂-SO₂-R¹ mit R¹ einem Alkylrest, überführt werden.

Für die Durchführung von gepulsten amperometrischen Detektionen sind prinzipiell alle bekannten unterschiedlichen Typen von Kohlenstoff- und Edelmetall-Elektroden geeignet. Typischerweise werden für reduktive Bestimmungen Edelmetall-Elektroden, beispielsweise Gold-, Silber und Goldamalgam-Elektroden, sowie Quecksilberfilm-Elektroden eingesetzt (siehe J. Frank, Chimia 1981, 35, 24, P. T. Kissinger, C.S. Brunett, K. Bratin, J.R. Rice, Spec. Publ. (U.S.) 1979, 519, 705 und S. Yao, A. Meyer, G. Henze, Fresenius J. Anal. Chem. 1991, 339, 207).

Im Rahmen des Verfahrens gemäß der vorliegenden Erfindung haben sich allerdings Glas-Kohlenstoffelektroden (glassy carbon electrode) nicht nur als geeignet für die Bestimmung von Dialkyldisulfiden erwiesen, sondern vielmehr als der einzige Arbeitselektrodentyp, der eine verlässliche Bestimmung von Dialkyldisulfiden erlaubt. Dies ist durchaus überraschend, denn nach gängiger Meinung in der Literatur zeigen Kohlenstoffelektroden, wie Glas-Kohlenstoffelektroden bei der Bestimmung von Disulfiden und Thiolen überhaupt keine Signale für Disulfide, sondern nur für Thiole (siehe C. Terashima et al., Analytical Chemistry, Vol. 75 No. 7, April 1, 2003, 1564 - 1572). Glaskohlenstoff-Elektroden bestehen typischerweise aus Kohlenstoff in Form von Stecknadeln oder Stäbchen mit einem Durchmesser von 2 bis 8 mm, die in einen Glas- oder Plastikhalter einzementiert oder eingepresst werden. Im Vergleich zu anderen Kohlenstoff-Elektroden wie Kohlepaste-Elektroden weisen Glaskohlenstoff-Elektroden zudem eine bessere chemische Widerstandsfähigkeit auf, da sie in den Lösungsmitteln, wie Methanol oder Acetonitril, beständig sind. Falls erforderlich können die Glaskohlenstoff-Elektroden durch Polieren mit einer Diamandpaste, gefolgt von einem Bad in einem Ultraschallbad mit hochreinem Wasser, auf ihre Verwendung vorbereitet werden.

Ein weiterer Vorteil von Glaskohlenstoffelektroden ist, dass sie Messungen über einen weiten Bereich von ca. -0,8 V bis ca. 1,2 V erlauben. Im Rahmen der vorliegenden Erfindung hat sich gezeigt, dass in diesem weiten Potentialbereich die elektroaktiven Dialkyldisulfide vollständig oder zumindest nahezu vollständig zu nicht-elektroaktiven Spezies oxidiert werden. Mit Hilfe von Glaskohlenstoffelektroden kann daher die gepulste amperometrische Detektion im oxidativen Modus durchgeführt werden.

In einer Ausführungsform des erfindungsgemäßen Verfahrens wird daher in der gepulsten amperometrischen Detektion eine Glaskohlenstoffelektrode als Arbeitselektrode verwendet.

Hinsichtlich der Referenzelektrode unterliegt das Verfahren gemäß der vorliegenden Erfindung keinen Einschränkungen. Denkbar ist daher die Kombination einer Glaskohlenstoff-Elektrode mit sämtlichen zur Verfügung stehenden Elektroden erster Art oder zweiter Art. Unter Elektroden erster Art werden im Rahmen der vorliegenden Erfindung und entsprechend dem allgemeinen Fachwissen des Fachmanns jegliche Elektroden verstanden, deren Potential direkt von der Konzentration der sie umgebenden Elektrolytlösung abhängt. Dies sind Feststoff-Elektroden wie zum Beispiel die Palladium-Elektrode. Im Rahmen der vorliegenden Erfindung und entsprechend dem allgemeinen Fachwissen des Fachmanns werden unter Elektroden zweiter Art diejenigen Elektroden verstanden, deren Potential nur indirekt von der sie umgebenden Elektrolytlösung abhängt. Durch die besondere Zusammensetzung der Elektrolytlösung wird das Potential der Elektrode konstant gehalten. Die Elektrolytlösung besteht zum einen aus einer gesättigten Lösung eines schwerlöslichen Salzes, dessen Kation aus dem gleichen Metall wie die Elektrode besteht und zum anderen aus einem gut löslichen Alkalisalz einer spezifischen Konzentration, welches das gleiche Anion wie das schwerlösliche Salz enthält. Das Potential hängt von der Konzentration des Kations des schwerlöslichen Salzes ab. Diese Konzentration ist wiederum über das Löslichkeitsprodukt mit der Konzentration des Anions gekoppelt. Wird die Konzentration des Anions konstant gehalten, bleibt daher auch das Potential konstant. Diese Anionenkonzentration lässt sich dadurch nahezu konstant halten, indem ihr Wert sehr groß gewählt wird. Das tatsächliche Potential ergibt sich durch Subtraktion dieser Spannungswerte vom Messwert. Wichtige Referenzelektroden zweiter Art sind die Silber-Silberchlorid-Elektrode und die Kalomel-Elektrode. Auf Grund ihrer Zuverlässlichkeit und unproblematischen Verwendung haben sich die Silber-Silberchlorid-Referenzelektrode und Palladiumreferenzelektrode als besonders vorteilhaft für das Verfahren gemäß der vorliegenden Erfindung erwiesen.

In einer weiteren Ausführungsform des erfindungsgemäßen Verfahrens wird daher in der gepulsten amperometrischen Detektion eine Silber-Silberchlorid-Elektrode oder Palladium-elektrode als Referenzelektrode eingesetzt.

Prinzipiell sind drei Varianten für die Durchführung einer gepulsten amperometrischen Detektion denkbar.

Bei der ersten Variante wird das Elektrodenpotential auf einen Bereich gepulst, in dem der Analyt elektroaktiv ist. Der zeitliche Verlauf des angelegten Potentials ähnelt daher einer Sprung- oder Heaviside-Funktion, wobei der Graph für den Potentialverlauf jedoch stetig verläuft und daher im Gegensatz zur Sprungfunktion keine Unterbrechung aufweist. Der zeitliche Verlauf des Messsignals zeichnet sich durch einen sprunghaften Anstieg auf einen Maximalwert für den Elektrolysestrom und eine sich unmittelbar daran anschließende Abnahme des gemessenen Stromes aus, was auf die Bildung einer Diffusionsschicht um die Elektrode und das fortdauernde Wachstum dieser Diffusionsschicht zurückgeführt wird.

Bei der zweiten Variante wird das Elektrodenpotential kurzfristig auf einen Bereich gepulst, in dem der Analyst elektroaktiv ist. In diesem Fall zeichnet sich der zeitliche Verlauf des an die Arbeitselektrode angelegten Potentials dadurch aus, dass das Anfangspotential in periodischen Zeitabständen für dieselbe Dauer durch jeweils identische rechteckige Potentialblöcke überlagert wird. Zwischen den Pulsen kann die sich an Arbeitselektrode ausbildende Diffusionsschicht durch erzwungene oder natürliche Konvektion beseitigt werden. Der zeitliche Verlauf des gemessenen Elektrolysestroms zeichnet sich durch einen sprunghaftes Ansteigen und Abnehmen des Elektrolysestromes aus, was zeitlich einhergeht mit den jeweiligen Pulsen. Auf Grund der zeitlichen Begrenzung des höheren Elektrodenpotentials ist die Abnahme des gemessenen Elektrolysestroms auf die Dauer des Pulsens beschränkt und fällt daher entsprechend niedriger aus als bei der ersten Variante.

Die dritte Variante umfasst insgesamt drei Potentialprofile: ein erstes Potentialprofil zur Konditionierung der Elektrode, ein zweites zur Sorption des Analyten und schließlich ein drittes Potentialprofil zur Elektrooxidation des betreffenden Analyten. Der Elektrolysestrom wird nur bei Anliegen des dritten Potentialprofils gemessen.

Im Rahmen der vorliegenden Erfindung hat sich gezeigt, dass eine gepulste amperometrische Detektion mit mindestens drei unterschiedlichen Potentialprofilen während eines vollständigen Messzyklus eine besonders gute Reproduzierbarkeit und Verlässlichkeit der Messung erlaubt.

In einer Ausführungsform des erfindungsgemäßen Verfahrens umfasst die gepulste amperometrische Detektion daher mindestens drei Potentialprofile.

Bevorzugt dient das niedrigste Potentialprofil (bzw. das elektronegativste Potentialprofil) zur Sorption des Analyten an der Arbeitselektrode und somit zur Konditionierung der Arbeits-elektrode. Das höchste Potentialprofil (bzw. das elektropositivste Potentialprofil) dient vorzugsweise zur vollständigen Oxidation von Adsorbaten an der Arbeitselektrode und bewirkt somit eine Reinigung der Arbeitselektrode. Ein weiteres Potentialprofil, dessen Höhe zwischen dem niedrigsten und dem höchsten Potentialprofil liegt, dient zur Elektrooxidation des zu bestimmenden Dialkyldisulfids; es dient somit auch zur Messung des betreffenden Elektrolyse-stroms und zur Bestimmung des betreffenden Dialkyldisulfids.

Vorzugsweise bildet im Rahmen der vorliegenden Erfindung die Abfolge aus Elektrooxidation bei einem Oxidationspotential, vollständiger Oxidation bei einem Reinigungspotential und Sorption des Analyten bei einem Konditionspotential einen Puls für eine gepulste amperometrische Detektion. Vorteilhafterweise schließt sich einem Oxidationspotential ein Reinigungspotential an. Dies hat den Vorteil, dass die während der Elektrooxidation nicht vollständig zu nicht-elektroaktiven Spezies oxidierten Verbindungen oder gegebenenfalls Verunreinigungen bzw. Rückstände an der Arbeitselektrode durch das Anlegen eines gegenüber dem Oxidationspotential elektropositiveren Reinigungspotentials vollständig von der Arbeitselektrode entfernt werden und die nachfolgende(n) Messung(en) daher nicht beeinträchtigen. Vorzugsweise schließt sich dem Reinigungspotential ein Konditionierungspotential an. Das Anlegen eines Konditionierungspotentials erleichtert die Sorption des zu bestimmenden Analyten an der Elektrodenoberfläche. Dies wiederum erhöht die Messgenauigkeit der anschließenden Messung des Elektrolysestroms während der Zeitdauer, in der ein Oxidationspotential an der Arbeitselektrode anliegt. Hinsichtlich der Anzahl einzelner spezifischer Potentialprofile, die in einer gepulsten amperometrischen Detektion eingesetzt werden können, unterliegt das erfindungsgemäße Verfahren keinerlei Beschränkung.

In einer bevorzugten Ausführungsform des erfindungsgemäßen Verfahrens umfasst die gepulste amperometrische Detektion daher mindestens ein Oxidationspotential, mindestens ein Reinigungspotential und mindestens ein Konditionierungspotential.

In Abhängigkeit von dem zu bestimmenden Dialkyldisulfid kann der Fachmann die spezifischen Werte für die individuellen Potentialprofile so einstellen, dass während der Zeit, in der die jeweiligen Potentialprofile Oxidationspotential, Reinigungspotential und Konditionierungs-potential an der Arbeitselektrode anliegen, nur die den einzelnen Potentialprofil zugewiesenen Effekte eintreten.

Im Rahmen der vorliegenden Erfindung hat sich gezeigt, dass eine Elektrooxidation bei einem Oxidationspotential im Bereich von ca. + 0,5 V bis ca. + 1,3 V sich für die Bestimmung sämtliche gängigen Dialkyldisulfide eignet und insbesondere für die Bestimmung von Dimethyldisulfid, welches eine Zwischenstufe bei der Herstellung der kommerziell bedeutenden Methansulfonsäure ist. Ferner hat sich gezeigt, dass eine Reinigungspotential im Bereich von mindestens ca. + 1,3 V ausreichend ist, um eine vollständige Reinigung der Arbeitselektrode von Adsorbaten bzw. verbliebenen Verschmutzungen zu gewährleisten. Zur Konditionierung der Arbeitselektrode hat sich außerdem ein Konditionierungspotential im Bereich von ca. - 0,5 V bis ca. + 0,5 V als geeignet erwiesen, um die Sorption des Analyten für die sich anschließende Elektrooxidation zu erleichtern. Im Rahmen der vorliegenden Erfindung bezeichnet der Ausdruck ca. im Zusammenhang mit der Angabe von Potentialwerten eine Abweichung von +/- 10 % von dem explizit genannten Wert.

In einer weiter bevorzugten Ausführungsform des erfindungsgemäßen Verfahrens hat daher das Oxidationspotential einen Wert von ca. + 0,5 V bis ca. + 1,3 V, das Reinigungspotential einen Wert von mindestens ca. + 1,3 V und das Konditionierungspotential einen Wert von ca. - 0,5 V bis ca. + 0,5 V.

Für die Bestimmung von Dialkyldisulfiden in Alkansulfonsäuren, insbesondere für die Bestimmung von Dimethyldisulfid in Methansulfonsäure, haben sich ein Oxidationspotential mit einem Wert von ca. + 0, 8 V bis ca. 1,2 V, ein Reinigungspotential mit einem Wert von mindestens ca. + 1,5 V und ein Konditionierungspotential mit einem Wert von ca. - 0, 3 V bis ca. + 0,3 V als besonders geeignet erwiesen, um präzise und reproduzierbare Ergebnisse zu gewährleisten.

In einer besonders bevorzugten Ausführungsform des erfindungsgemäßen Verfahrens hat deshalb das Oxidationspotential einen Wert von ca. + 0,8 V bis ca. 1,2 V, das Reinigungspotential einen Wert von mindestens ca. + 1,5 V und das Konditionierungspotential einen Wert von ca. - 0,3 V bis ca. + 0,3 V.

Die Anlegung dieser und vorangegangener Potentialprofile an die Arbeitselektrode unterliegt keinerlei Beschränkungen. Beispielsweise kann ein spezifisches Potential mit einem konstanten Wert aus den vorstehend genannten Bereichen für das betreffende Potential während der gesamten Zeitdauer an die Arbeitselektrode angelegt werden. Denkbar ist auch ein Rampenverlauf für das betreffende Potential: In diesem Fall wird das betreffende Potential mit seinem niedrigsten Wert aus dem vorstehend genannten Bereich für dieses Profil zu Beginn der Zeitdauer an die Arbeitselektrode angelegt und bis zum Ende der Zeitdauer wird der Wert für das Potential mit einem konstanten Potentialanstieg pro definierter Zeiteinheit auf den maximalen Wert aus dem vorstehend genannten Bereich erhöht.

Damit gewährleistet wird, dass die durch Anlegen der jeweiligen Potentialprofile an die Arbeitselektrode erstrebten Zwecke auch tatsächlich eintreten, müssen die betreffenden Potentiale für eine ausreichende Zeit an der Arbeitselektrode anliegen. Unabhängig von dem zu bestimmenden Dialkyldisulfid haben sich die folgenden Zeiträume als günstig erwiesen, damit die den Potentialprofilen Oxidationspotential, Reinigungspotential und Konditionierungspotential zugewiesenen Effekte auch eintreten können: mindestens ca. 60 ms für das Oxidationspotential, mindestens ca. 10 ms für das Reinigungspotential und mindestens ca. 40 ms für das Konditionierungspotential. Im Rahmen der vorliegenden Erfindung bezeichnet der Ausdruck ca. im Zusammenhang mit der Angabe von Zeitintervallen eine Abweichung von +/- 10 % von dem explizit genannten Wert. Abweichungen in dieser Größenordnung führen allgemein nicht zu einer merklichen Verschlechterung des Signal-Rausch-Verhältnisses.

In einer weiteren Ausführungsform der vorliegenden Erfindung beträgt die Dauer des Oxidationspotentials mindestens ca. 60 ms, die Dauer des Reinigungspotentials mindestens ca. 10 ms und die Dauer des Konditionierungspotentials mindestens ca. 40 ms.

Auch wenn in dem Zeitraum, in dem das Oxidationspotential an der Arbeitselektrode anliegt, prinzipiell der entsprechende Elektrolysestrom für das betreffende Dialkyldisulfid fließt, wird dennoch nicht während des ganzen Zeitraums der Elektrolysestrom gemessen. Denn zu Beginn der Dauer des Oxidationspotentials ist der Elektrolysestrom noch nicht konstant. Um aus den Schwankungen des Elektrolysestrom resultierende Messungenauigkeiten zu vermeiden, wird daher der Elektrolysestrom erst gemessen, nachdem sich dieser auf einen konstanten Wert eingestellt hat. Typischerweise wird der Elektrolysestrom erst in der letzten Hälfte der Dauer des Oxidationspotentials, bevorzugt erst im letzten Drittel der Dauer des Oxidationspotentials gemessen.

Der Elektrolysestrom als solcher stellt ein Kurzzeitsignal dar, für dessen möglichst genaue Messung das Signal-Rausch-Verhältnis relevant ist. Für die Messungen von kurzzeitigen amperometrischen Signalen wird das Signal-Rausch-Verhältnis durch die instrumentelle Vorgehensweise beeinflusst, die zum Abfragen des Elektrodenstroms verwendet wird. Eine wesentliche Rauschkomponente der amperometrischen Bestimmung bei konstantem Elektrodenpotential, also ohne Pulsen des Arbeitselektrodenpotentials, ist sinusförmig und korreliert mit der 60 Hz-Zeilenwechselfrequenz. Um möglichst Messungen mit Hilfe der gepulsten amperometrischen Detektion zu erzielen, wird daher im Rahmen der vorliegenden Erfindung ein Signal verwendet, dass durchschnittlich einem Mehrfachen der Periode einer einzelnen 60 Hz-Oszillation entspricht, also einer Schwingungsdauer von 16,7 ms. In diesem Fall gibt es daher keinen Beitrag des sinusförmigen 60 Hz-Rauschsignals zur Signalstärke. Das Zeit-Integral einer sinusförmigen 60 Hz-Rauschsignals hat den Wert 0 für jedes beliebige ganzzahlige Vielfache *v* der Perioden mit einer Schwingungsdauer von 16,7 ms. Die analytische Signalstärke kann daher für Vielfache *v* der Schwingungsdauer, die deutlich größer als 1 sind, beträchtlich gesteigert werden. Wenn also das analytische Signal während der gesamten Periode von *v* * 16,7 ms einen konstanten Wert hat, dann wird das Signal-Rausch-Verhältnis um den Faktor *v* verstärkt. Im Rahmen der vorliegenden Erfindung haben sich die ganzzahligen Vielfachen *v* der Schwingungsdauer von 16,7 ms von mindestens 6 als günstig erwiesen, um präzise und reproduzierbare Ergebnisse für den in der letzten Hälfte, bevorzugt im letzten Drittel der Dauer des Oxidationspotentials gemessenen Elektrolysestrom zu gewährleisten.

In einer Ausführungsform des erfindungsgemäßen Verfahrens beträgt daher die Messdauer ein ganzzahliges Vielfaches von 16,7 ms.

Bei einer Dauer von mindestens 300 ms für das Oxidationspotential liegt die Messdauer für den Elektrolysestrom zwischen ca. 100 ms und 150 ms. Bevorzugt beträgt die Messdauer dann ca. 50 ms, ca. 67 ms, ca. 84 ms, ca. 100 ms, ca. 117 ms, ca. 134 ms und ca. 150 ms. In diesen Fällen handelt sich um das 3-fache, 4-fache, 5-fache, 6-fache, 7-fache, 8-fache oder 9-fache der Schwingungsdauer von 16,7 ms.

In einer bevorzugten Ausführungsform des erfindungsgemäßen Verfahrens beträgt daher die Dauer des Oxidationspotentials mindestens ca. 300 ms.

Bei einer Dauer des Oxidationspotentials von mindestens ca. 300 ms beträgt dann die Dauer des Reinigungspotentials vorzugsweise mindestens ca. 50 ms und die Dauer des Konditionierungspotentials vorzugsweise mindestens ca. 200 ms.

Eine typische Dauer für einen sich aus Oxidationspotential, Reinigungspotential und Konditionierungspotential zusammensetzenden Messzyklus hat somit eine Gesamtdauer von mindestens ca. 500 ms.

Da der Elektrolysestrom typischerweise erst in der letzten Hälfte der Dauer des Oxidationspotentials, bevorzugt erst im letzten Drittel der Dauer des Oxidationspotentials gemessen wird, beträgt er vorzugsweise ein ganzzahliges Vielfaches von 16,7 ms und beträgt zwischen der Hälfte und einem Drittel der Dauer des Oxidationspotentials.

Zur chromatographischen Trennung des Analyten, der das mindestens eine Dialkyldisulfid und die Alkansulfonsäure enthält, hat sich im Rahmen der vorliegenden Erfindung die Umkehrphasen-Chromatographie als geeignete chromatographische Methode herausgestellt. Der Begriff Umkehrphase (reversed phase) wird im Kontext der vorliegenden Erfindung entsprechend dem allgemeinen Fachwissen des Fachmanns verwendet und bezeichnet eine unpolare stationäre Phase wie oberflächenmodifiziertes Kieselgel, das durch Hydrophobieren seiner Oberfläche mit C₈-C₁₈-Alkylgruppen, meist C₈-Alkyl- oder C₁₈-Alkylgruppen, unpolar gemacht wurde. Als mobile Phase kommen in der Umkehrphasen-Chromatographie polare Lösungsmittel, zum Beispiel Wasser, Methanol oder Acetonitril oder Mischungen davon, zur Anwendung. Die Retentionszeiten der Analyten werden durch die hydrophoben Wechselwirkungen zwischen dem jeweiligen Analyt und der stationären Phase sowie die Polarität der mobilen Phase bestimmt. Wenig polare Substanzen werden daher langsam von einer Umkehrphasen-Chromatographiesäule eluiert, während stärker polare Substanzen schnell von einer Umkehrphasen-Chromatographiesäule eluiert werden.

Dies ist insbesondere für die chromatographische Trennung von Proben aus der Herstellung von Alkansulfonsäuren durch Oxidation von Dialkyldisulfiden relevant. Denn diese Oxidation verläuft über die Bildung von S-Alkyl-alkanthiosulfonaten, auch als Dialkylthiosulfonate bezeichnet, die auf Grund der freien Elektronenpaare am Schwefelatom des Alkylthioethers genauso wie das zu bestimmende Dialkyldisulfid an der Arbeitselektrode sorbiert und dort elektrochemisch oxidiert werden können. In diesem Fall würden die S-Alkyl-alkanthiosulfonate jedoch die Messung des Elektrolysestroms für das Dialkyldisulfids beeinflussen und zu höheren Werten für das zu bestimmende Dialkyldisulfid führen. Mit Hilfe der Umkehrphasen-chromatographie lassen sich die Dialkyldisulfide von Schwefel enthaltenden Verbindungen, die bei der Bestimmung der Dialkyldisulfide stören können, vollständig trennen, was eine Reproduzierbarkeit und Verlässlichkeit der mit dem Verfahren gemäß der vorliegenden Erfindung erhaltenen Werte garantiert.

In einer Ausführungsform des erfindungsgemäßen Verfahrens wird daher die chromatographische Trennung als Umkehrphasen-Chromatographie (reversed phase chromatography) durchgeführt.

Hinsichtlich der Ausgestaltung der Durchführung dieser Umkehrphasen-Chromatographie unterliegt das Verfahren gemäß der vorliegenden Erfindung prinzipiell keinen Einschränkungen. Daher sind grundsätzlich alle denkbaren Ausgestaltungen der Umkehrphasen-Chromatographie, wie Ionenchromatographie und Hochleistungsflüssigkeits-chromatographie, im Verfahren gemäß der vorliegenden Erfindung einsetzbar. Es hat sich jedoch gezeigt, dass die Ionenchromatographie mit überschaubarem Aufwand eine vollständige Trennung des Analyten in seine einzelnen Bestandteile erlaubt. Zudem hat die Ionenchromatographie gegenüber der Hochleistungschromatographie den Vorteil, dass sie eine größere Anzahl von Möglichkeiten zur Einstellung von Parametern für (möglichst) optimale Trennbedingungen erlaubt.

In einer bevorzugten Ausführungsform des erfindungsgemäßen Verfahrens wird die chromatographische Trennung daher als Ionenchromatographie durchgeführt.

Als geeignete polare Lösungsmittel zur Durchführung der Umkehrphasen-Chromatographie für Dialkyldisulfide in Alkansulfonsäuren haben sich protische Lösungsmittel wie Methanol, Ethanol und Wasser herausgestellt. Im Rahmen der vorliegenden Erfindung wird der Begriff protische Lösungsmittel entsprechend dem allgemeinen Fachwissen des Fachmanns verwendet und bezeichnet daher solche Verbindungen, die über eine funktionelle Gruppe verfügen, aus der Wasserstoffatome im Molekül als Protonen abgespalten werden können.

In einer weiteren Ausführungsform des erfindungsgemäßen Verfahrens, umfasst das erfindungsgemäße Verfahren daher zusätzlichen den der Bestimmung des Dialkyldisulfids vorangehenden Schritts des Bereitstellens eines Analyten durch Lösen einer Probe, die ein Dialkyldisulfid und eine Alkansulfonsäure enthält, in einem protischen Lösungsmittel oder einem Gemisch aus protischen Lösungsmitteln.

Als besonders geeignet für die Durchführung der chromatographischen Trennung hat sich im Rahmen der vorliegenden Erfindung ein Gemisch aus Methanol und Wasser erwiesen.

Bevorzugt wird daher im des erfindungsgemäßen Verfahrens ein Gemisch aus Methanol und Wasser zur Lösung der ein Dialkyldisulfid und eine Alkansulfonsäure enthaltenden Probe verwendet.

Bevorzugt enthält der Eluent für die chromatographische Trennung Methanol und Wasser in einem Volumenverhältnis von 3:7.

Durch das Auflösen der das Dialkyldisulfid und die Alkansulfonsäure enthaltenden Probe in einem protischen Lösungsmittel oder einem Gemisch aus protischen Lösungsmitteln wird diese Probe verdünnt.

Bevorzugt wird durch das Bereitstellen eines Analyten, indem eine ein Dialkyldisulfid und eine Alkansulfonsäure enthaltende Probe in einem protischen Lösungsmittel oder einem Gemisch aus protischen Lösungsmitteln aufgelöst wird, diese Probe um einen Faktor von ca. 10 bis ca. 1000 verdünnt.

Der für die chromatographische Trennung verwendete Eluent durchfließt nach Austritt aus der Chromatographiesäule die amperometrische Messzelle. Daher muss das zur Lösung der Probe verwendete protische Lösungsmittel oder das Gemisch aus protischen Lösungsmitteln nicht nur die Funktion eines Eluenten in der chromatographischen Trennung erfüllen, sondern auch die eines Elektrolyten in der anschließenden Bestimmung des Dialkyldisulfids mittels gepulster amperometrischer Detektion. Dies setzt eine Eigenleitfähigkeit des betreffenden Lösungsmittels oder Lösungsmittelgemisches voraus, die im Regelfall nicht allein durch zusätzlich in der Probe enthaltene Ionen wie Chlorid, Nitrat oder dergleichen bewirkt wird. Im einfachsten Fall wird die erforderliche Leitfähigkeit durch die in der Probe anwesende Alkansulfonsäure, vorzugsweise Methansulfonsäure, herbeigeführt.

Die wichtigste Alkansulfonsäure ist grundsätzlich Methansulfonsäure, die bevorzugt durch Oxidation von Dimethyldisulfid erhalten wird. Es hat sich gezeigt, dass das Bestimmungsverfahren gemäß der vorliegenden Erfindung reproduzierbare und verlässliche Ergebnisse für die Bestimmung von Dimethyldisulfid in Methansulfonsäure ermöglicht.

Bevorzugt ist daher im erfindungsgemäßen Verfahren das zu bestimmende Dialkyldisulfid Dimethyldisulfid, und die Alkansulfonsäure ist Methansulfonsäure.

Durch die folgenden Beispiele und Vergleichsbeispiele werden das Verfahren gemäß der vorliegenden Erfindung und seine Vorteile weitergehend erläutert.

### Abbildungen:

- Figur 1:: Chromatogramm des Vergleichsbeispiels 1
- Figur 2:: Chromatogramm des Vergleichsbeispiels 2
- Figur 3:: Chromatogramm des Vergleichsbeispiels 3
- Figur 4:: Chromatogramm des Vergleichsbeispiels 4
- Figur 5:: Chromatogramm des Beispiels 1
- Figur 6:: Chromatogramm des Beispiels 2
- Figur 7:: Chromatogramm des Beispiels 3
- Figur 8:: Chromatogramm des Beispiels 4
- Figur 9:: ¹H NMR-Spektrum des Vergleichsversuchs 5

### Beispiele:

### I. Technische Ausstattung

### 1. Verwendete Geräte:

Probenaufgabesystem Professional Sample Processor 858 (Nr. 2.858.0010 von Metrohm) ausgestattet mit einem Dosiersystem 800 Dosino 800 (Nr. 2.800.0010 von Metrohm).

lonenchromatograph 882 Compact IC plus (Nr. 2.850.9110 von Metrohm) ausgestattet mit einem UV/VIS Detektor Vario 944 (Nr. 2.944.0010 von Metrohm), einem IC Amperometrischen Detektor (Nr. 2.850.9110 von Metrohm) und einer Druckanzeige.

Ionenchromatograph 883 Basic IC plus (2.883.0020 von Metrohm) ausgestattet mit einem Leitfähigkeitsdetektor in Form des Moduls iDetector (standardmäßige Ausstattung des lonenchromatographen 883 Basic IC plus) und einer Druckanzeige.

In den Versuchen ist das erste Gerät das Probenaufgabesystem, gefolgt vom lonenchromatograph, der mit einem entsprechenden Detektor ausgestattet ist.

### 2. Chromatographie-Säulen:

Im lonenchromatograph 882 Compact IC plus wird eine Säule von Typ Phenomenex^{®} Gemini^{®} 5U C6-Phenyl 110A 250/4.6 verwendet. Alternativ kann auch eine Säule vom Typ ProntoSil 120-5-C18 AQ 150/4.0 (6.1008.100 von Metrohm) verwendet werden.

Im lonenchromatograph 883 Basic IC Plus wird ein Metrosep A Supp 1 Guard/4.6 als Vorsäule bzw. Guardsäule und ein Anionentrennsäule Metrosep A Supp 5 250/4.0 als Hauptsäure verwendet. Ferner wird ein Metrohm Suppressor-Modul MSM als Kationentauscher verwendet.

### 3. Eluenten:

Eingesetzte Chemikalien:
- Reinstwasser mit einem Leitwiderstand von 18,2 MOhm und einem TOC-Wert von 5 ppb, wobei der TOC für organic organic carbon steht und die Summe des gesamten organischen Kohlenstoffs in einer Wasserprobe angibt (aus einer Reinstwasseranlge Milli-Q Advantage A10 mit Q-POC Entnahmestelle oder einer Millipore-Anlage),
- Methanol LiChrosolv HPLC Grade (high performance liquid chromatography) (1.06007 von Merck),
- Kaliumdihydrogenphosphat 99 %(1.04873 von Merck),
- Phosphorsäure 85 % (1.00573 von Merck), und
- Methansulfonsäure (471356 von Sigma Aldrich).

Der Eluent für den lonenchromatograph 882 Compact IC plus setzt sich zusammen aus:
- 70 % Reinstwasser,
- 30 % Methanol,
- 10 % Kaliumdihydrogenphosphat, und
- 1,2 g Phosphorsäure.

Der Eluent für den lonenchromatograph 883 Basic IC plus setzt sich zusammen aus:
- 100 % Reinstwasser,
- 3,2 mmol Natriumcarbonat, und
- 1,0 mmol Diyhdrogencarbonat.

### II. Amperometrische Detektion bei konstanter Spannung

Zum Vergleich mit der gepulsten amperometrischen Detektion wurde Dimethyldisulfid (DMDS) in einer Probe aus der Herstellung von Methansulfonsäure (MSA) durch Oxidation von Dimethyldisulfid mittels amperometrischer Detektion bei konstanter Spannung bestimmt.

Hierfür wurde ein Analyt verwendet, der durch Auflösen von 2 Tropfen der Probe aus der Methansulfonsäure-Herstellung in 50 ml eines Gemisches aus Acetonitril und Wasser (Volumenverhältnis 30:70) bereitgestellt wurde (im Folgenden als Analyt V bezeichnet). Durchgeführt wurden die Messungen über einen Zeitraum von ungefähr einer Stunde mit einem lonenchromatograph 882 Compact IC Plus 1 (2.850.9110 der Firma Metrohm), das mit einer Trennsäule ProntoSil 120-5-C18 AQ - 150/4.0 (6.1008.100 der Firma Metrohm), einem Metrosep RP2 Guard /3.5 (6.1011.030 der Firma Metrohm) und einem amperometrischen Detektor (2.850.9110 der Firma Metrohm) ausgestattet ist. Dieser Detektor besitzt eine Messzelle vom Wall Jet Cell-Typ (6.5337.020 der Firma Metrohm), die ausgestattet ist mit einer Glaskohlenstoff-Arbeitselektrode (6.1257.220 der Firma Metrohm) von 3 mm Durchmesser, einer Silber/Silberchlorid-Referenzelektrode (6.1257.720 der Firma Metrohm) und einer Hilfselektrode (6.1247.000 der Firma Metrohm). Das Injektionsvolumen betrug 20 µl und die Temperatur der Trennsäule befand sich bei ca. 25°C.

Im Anschluss wurden die Bestimmungen von Dimethyldisulfid miteinander verglichen, um Aussagen über die Reproduzierbarkeit und Verlässlichkeit der amperometrischen Bestimmung bei konstanter Spannung machen zu können. Hierfür wurden die Werte für die Fläche unter dem Peak für Dimethyldisulfid in den jeweiligen Chromatogrammen miteinander verglichen.

### Vergleichsbeispiel 1:

Zum Zeitpunkt t = 0 wurde der Analyt V in die Ionenchromatographie injiziert. Die Parameter der durchgeführten Ionenchromatographie sind:

| | |
|---|---|
| Eluent: | MeOH : H₂O (3:7) + 2 g/l KH₂PO₄ + 2 g/l H₃PO₄ |
| Fluss: | 1,2 ml/min |
| Druck: | 173,1 bar |
| Aufnahmedauer: | 20,7 min |

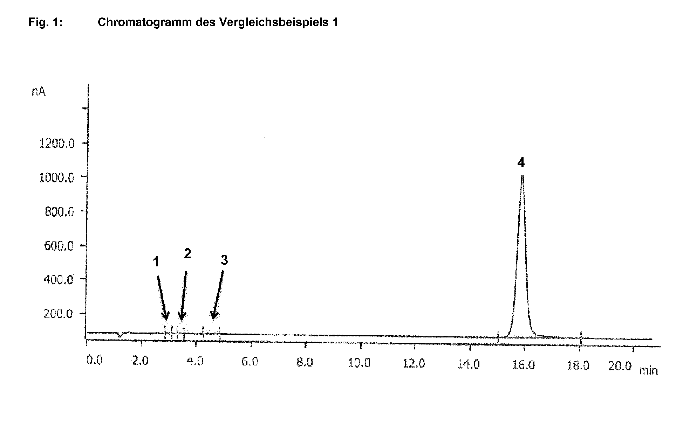

Die im Eluat dieser Ionenchromatographie bestimmten Komponenten sind in der Tabelle 1 aufgelistet und das Chromatogramm dieser Bestimmung ist in Abbildung 1 dargestellt. Die Nummer der Peaks in dieser Tabelle stimmt mit den entsprechend bezifferten Peaks im Chromatogramm der Abbildung 1 überein.

**Tabelle 1: Ergebnisse der Bestimmung in Vergleichsbeispiel 1**

| **Peak-Nr.** | **Retentionszeit [min]** | **Fläche (nA) * min** | **Höhe [nA]** | **Komponente** |
|---|---|---|---|---|
| 1 | 2,997 | 0,0253 | 0,176 | Bromid |
| 2 | 3,457 | 0,0163 | 0,148 | Nitrat |
| 3 | 4,415 | 0,4227 | 3,483 | Phosphat |
| 4 | 15,835 | 352,7363 | 958,275 | DMDS |

### Vergleichsbeispiel 2:

Zum Zeitpunkt t = 22 min wurde der Analyt V in die Ionenchromatographie injiziert. Die Parameter der durchgeführten Ionenchromatographie sind:

| | |
|---|---|
| Eluent: | MeOH : H₂O (3:7) + 2 g/l KH₂PO₄ + 2 g/l H₃PO₄ |
| Fluss: | 1,2 ml/min |
| Druck: | 170,8 bar |
| Aufnahmedauer: | 18,5 min |

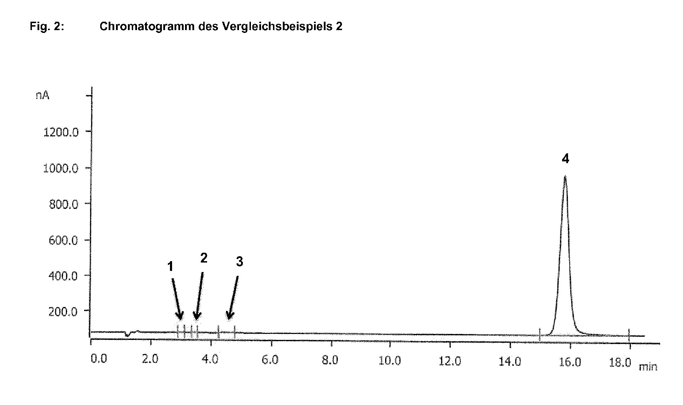

Die im Eluat dieser Ionenchromatographie bestimmten Komponenten sind in der Tabelle 2 aufgelistet und das Chromatogramm dieser Bestimmung ist in Abbildung 2 dargestellt. Die Nummer der Peaks in dieser Tabelle stimmt mit den entsprechend bezifferten Peaks im Chromatogramm der Abbildung 2 überein.

**Tabelle 2: Ergebnisse der Bestimmung in Vergleichsbeispiel 2**

| **Peak-Nr.** | **Retentionszeit [min]** | **Fläche (nA) * min** | **Höhe [nA]** | **Komponente** |
|---|---|---|---|---|
| 1 | 2,988 | 0,0230 | 0,163 | Bromid |
| 2 | 3,455 | 0,0140 | 0,149 | Nitrat |
| 3 | 4,405 | 0,3272 | 2,717 | Phosphat |
| 4 | 15,752 | 321,3513 | 891,404 | DMDS |

Bei identischem Analyten wird mit der amerometrischen Bestimmung bei konstanter Spannung bereits 22 Minuten nach der ersten Messung ein um 8,9% geringerer Flächen-Wert für die Bestimmung von Dimethyldisulfid in Methansulfonsäure erhalten.

### Vergleichsbeispiel 3:

Zum Zeitpunkt t = 42 min wurde der Analyt V in die Ionenchromatographie injiziert. Die Parameter der durchgeführten Ionenchromatographie sind:

| | |
|---|---|
| Eluent: | MeOH : H₂O (3:7) + 2 g/l KH₂PO₄ + 2 g/l H₃PO₄ |
| Fluss: | 1,2 ml/min |
| Druck: | 173,1 bar |
| Aufnahmedauer: | 20,7 min |

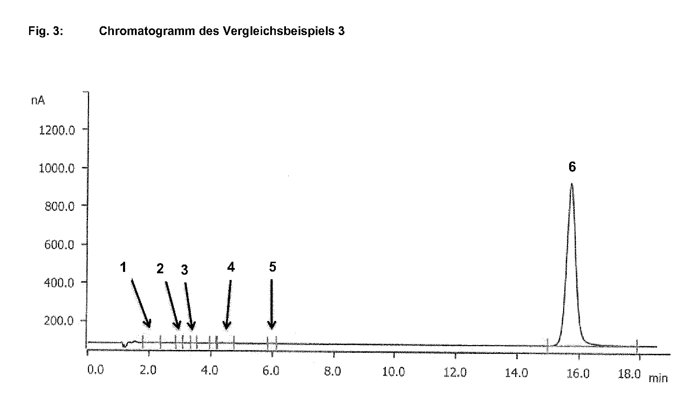

Die im Eluat dieser Ionenchromatographie bestimmten Komponenten sind in der Tabelle 3 aufgelistet und das Chromatogramm dieser Bestimmung ist in Abbildung 3 dargestellt. Die Nummer der Peaks in dieser Tabelle stimmt mit den entsprechend bezifferten Peaks im Chromatogramm der Abbildung 3 überein.

**Tabelle 3: Ergebnisse der Bestimmung in Vergleichsbeispiel 3**

| **Peak-Nr.** | **Retentionszeit [min]** | **Fläche (nA) * min** | **Höhe [nA]** | **Komponente** |
|---|---|---|---|---|
| 1 | 1,908 | 0,0337 | 0,175 | MSA |
| 2 | 2,992 | 0,0234 | 0,175 | Bromid |
| 3 | 3,458 | 0,0148 | 0,154 | Nitrat |
| 4 | 4,403 | 0,2953 | 2,442 | Phosphat |
| 5 | 6,002 | 0,0066 | 0,030 | MMTS |
| 6 | 15,705 | 303,7108 | 853,682 | DMDS |

Bereits 42 Minuten nach der ersten Messung wird mittels amperometrischer Bestimmung bei konstanter Spannung ein um 13,9 % geringerer Flächen-Wert für Dimethyldisulfid erhalten.

### Vergleichsbeispiel 4:

Zum Zeitpunkt t = 62 min wurde der Analyt V in die Ionenchromatographie injiziert. Die Parameter der durchgeführten Ionenchromatographie sind:

| | |
|---|---|
| Eluent: | MeOH : H₂O (3:7) + 2 g/l KH₂PO₄ + 2 g/l H₃PO₄ |
| Fluss: | 1,2 ml/min |
| Druck: | 168,0 bar |
| Aufnahmedauer: | 25,0 min |

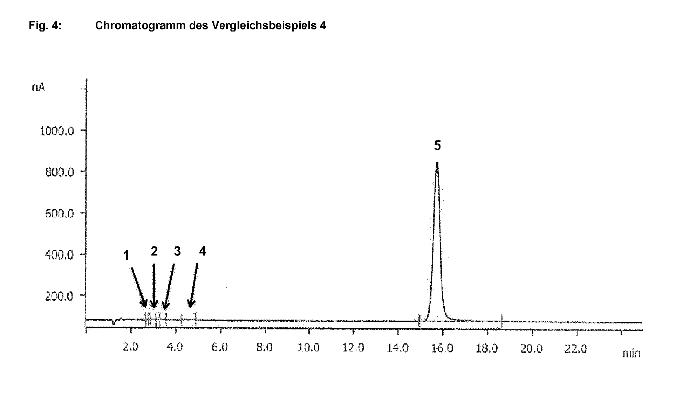

Die im Eluat dieser Ionenchromatographie bestimmten Komponenten sind in der Tabelle 4 aufgelistet und das Chromatogramm dieser Bestimmung ist in Abbildung 4 dargestellt. Die Nummer der Peaks in dieser Tabelle stimmt mit den entsprechend bezifferten Peaks im Chromatogramm der Abbildung 4 überein.

**Tabelle 4: Ergebnisse der Bestimmung in Vergleichsbeispiel 4**

| **Peak-Nr.** | **Retentionszeit [min]** | **Fläche (nA) * min** | **Höhe [nA]** | **Komponente** |
|---|---|---|---|---|
| 1 | 2,720 | 0,0037 | 0,059 | Nitrit |
| 2 | 3,000 | 0,0232 | 0,150 | Bromid |
| 3 | 3,468 | 0,0191 | 0,154 | Nitrat |
| 4 | 4,402 | 0,2589 | 2,106 | Phosphat |
| 5 | 15,682 | 275,3675 | 771,120 | DMDS |

62 Minuten nach der ersten Messung liegt der Flächen-Wert für die Bestimmung von Dimethyldisulfid sogar um 21,9 % unter dem Ausgangswert.

Die Vergleichsversuche 1 bis 4 zeigen, dass eine amperometrische Detektion mit konstanter Spannung grundsätzlich nicht geeignet ist für eine reproduzierbare und verlässliche Bestimmung von Dialkyldisulfiden in Alkansulfonsäuren und insbesondere von Dimethyldisulfiden in Methansulfonsäure.

### III. Gepulste amperometrische Detektion

Mittels gepulster amperometrischer Detektion wurde über einen Zeitraum von mehr als einer Stunde Dimethyldisulfid in einer Probe aus der Herstellung von Methansulfonsäure durch Oxidation von Dimethyldisulfid bestimmt.

Hierfür wurde ein Analyt verwendet, der durch Auflösen von 3 Tropfen der Probe aus der Methansulfonsäure-Herstellung in 100 ml eines Gemisches aus Acetonitril und Wasser (Volumenverhältnis 30:70) bereitgestellt wurde (im Folgenden als Analyt B bezeichnet).

Es wurde dieselbe instrumentelle Anordnung wie bei der amperometrischen Detektion mit konstanter Spannung verwendet. Das Injektionsvolumen betrug 20 µl und die Temperatur der Trennsäule befand sich bei ca. 25°C.

Das Elektrooxidationspotential hat einen Wert von 1,15 V und eine Dauer von 300 ms, wobei die Messdauer 100 ms beträgt. Das Reinigungspotential hat einen Wert von 1,5 V und dauert 50 ms und das Konditionierungspotential hat einen Wert von 0,1 V und eine Dauer von 200 ms. Die Gesamtdauer eines Messzyklus beträgt somit 550 ms.

### Beispiel 1:

Zum Zeitpunkt t = 0 min wurde der Analyt B in die Ionenchromatographie injiziert. Die Parameter der durchgeführten Ionenchromatographie sind:

| | |
|---|---|
| Eluent: | MeOH : H₂O (3:7) + 4,2 g/l KH₂PO₄ + 0,2 g/l H₃PO₄ |
| Fluss: | 1,2 ml/min |
| Druck: | 160,1 bar |
| Aufnahmedauer: | 25,0 min |

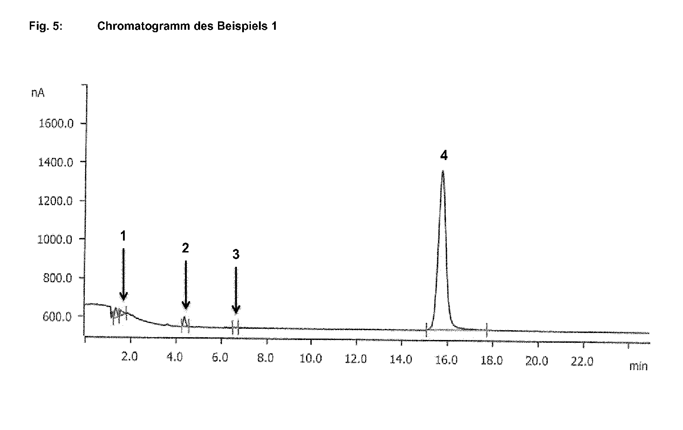

Die im Eluat dieser Ionenchromatographie bestimmten Komponenten sind in der Tabelle 5 aufgelistet und das Chromatogramm dieser Bestimmung ist in Abbildung 5 dargestellt. Die Nummer der Peaks in dieser Tabelle stimmt mit den entsprechend bezifferten Peaks im Chromatogramm der Abbildung 5 überein.

**Tabelle 5: Ergebnisse der Bestimmung in Beispiel 1**

| **Peak-Nr.** | **Retentionszeit [min]** | **Fläche (nA) * min** | **Höhe [nA]** | **Komponente** |
|---|---|---|---|---|
| 1 | 1,631 | 3,7303 | 17,486 | Fluorid |
| 2 | 4,390 | 5,6792 | 48,794 | Phosphat |
| 3 | 6,644 | 0,2156 | 1,330 | MMTS |
| 4 | 15,716 | 333,7089 | 771,120 | DMDS |

### Beispiel 2:

Zum Zeitpunkt t = 42 min wurde der Analyt B in die Ionenchromatographie injiziert. Die Parameter der durchgeführten Ionenchromatographie sind:

| | |
|---|---|
| Eluent: | MeOH : H₂O (3:7) + 4,2 g/l KH₂PO₄ + 0,2 g/l H₃PO₄ |
| Fluss: | 1,2 ml/min |
| Druck: | 161,2 bar |
| Aufnahmedauer: | 21,7 min |

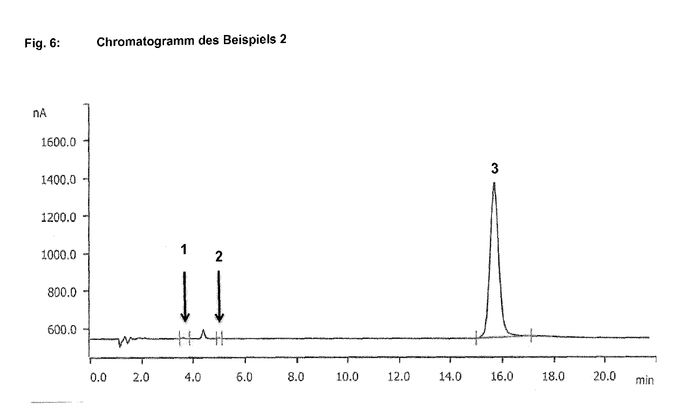

Die im Eluat dieser Ionenchromatographie bestimmten Komponenten sind in der Tabelle 6 aufgelistet und das Chromatogramm dieser Bestimmung ist in Abbildung 6 dargestellt. Die Nummer der Peaks in dieser Tabelle stimmt mit den entsprechend bezifferten Peaks im Chromatogramm der Abbildung 6 überein.

**Tabelle 6: Ergebnisse der Bestimmung in Beispiel 2**

| **Peak-Nr.** | **Retentionszeit [min]** | **Fläche (nA) * min** | **Höhe [nA]** | **Komponente** |
|---|---|---|---|---|
| 1 | 3,620 | 0,7375 | 6,608 | Nitrat |
| 2 | 4,985 | 0,2138 | 1,922 | Phosphat |
| 3 | 15,689 | 327,0947 | 825,014 | DMDS |

### Beispiel 3:

Zum Zeitpunkt t = 2,5 h wurde der Analyt B in die Ionenchromatographie injiziert. Die Parameter der durchgeführten Ionenchromatographie sind:

| | |
|---|---|
| Eluent: | MeOH : H₂O (3:7) + 4,2 g/l KH₂PO₄ + 0,2 g/l H₃PO₄ |
| Fluss: | 1,2 ml/min |
| Druck: | 161,2 bar |
| Aufnahmedauer: | 21,7 min |

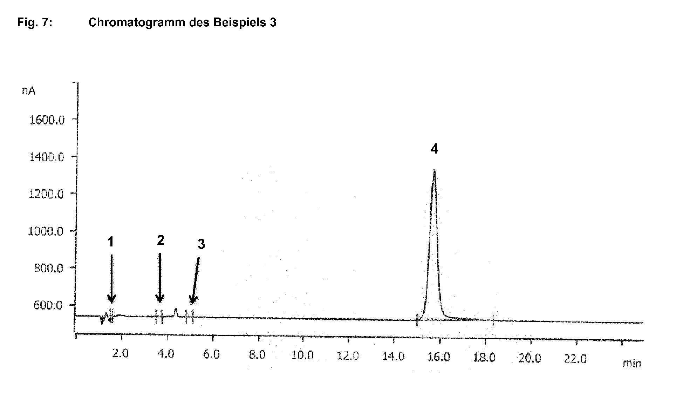

Die im Eluat dieser Ionenchromatographie bestimmten Komponenten sind in der Tabelle 7 aufgelistet und das Chromatogramm dieser Bestimmung ist in Abbildung 7 dargestellt. Die Nummer der Peaks in dieser Tabelle stimmt mit den entsprechend bezifferten Peaks im Chromatogramm der Abbildung 7 überein.

**Tabelle 7: Ergebnisse der Bestimmung in Beispiel 3**

| **Peak-Nr.** | **Retentionszeit [min]** | **Fläche (nA) * min** | **Höhe [nA]** | **Komponente** |
|---|---|---|---|---|
| 1 | 1,576 | 0,4106 | 8,942 | Fluorid |
| 2 | 3,629 | 0,4906 | 4,236 | Nitrat |
| 3 | 4,994 | 0,2911 | 1,955 | Phosphat |
| 4 | 15,652 | 332,5320 | 811,847 | DMDS |

### Diskussion der Messergebnisse:

Zur Beurteilung der Genauigkeit der gepulsten amperometrischen Detektion werden die in den Beispielen 1 bis 3 bestimmten Werte für die Fläche unter den Peaks für das Dimethyldisulfid herangezogen. Denn dieser Wert ist ein Anhaltspunkt für die Konzentration des zu bestimmenden Dimethyldisulfids.

Die in den Beispielen 1 und 2 bestimmten Flächenwerte weichen lediglich um 1,98 % voneinander ab. Die Abweichung der in den zeitlich am weitesten auseinanderliegenden Beispielen 1 und 3 ermittelten Flächenwerte beträgt sogar nur 0,35 %. Da die in den Beispielen 1 und 3 ermittelten Werte nahezu identisch sind, erlaubt die gepulste amperometrische Detektion also eine zuverlässige Bestimmung des Dimethyldisulfids. Die im Beispiel 2 aufgetretene Abweichung ist daher nicht auf eine eventuelle mangelnde Reproduzierbarkeit der Messergebnisse, sondern auf einen Messfehler zurückzuführen.

Die in diesem Beispiel ermittelte Dimethyldisulfid-Konzentration ist identisch mit der aus Beispiel 1. Zudem beträgt die Abweichung von dem in Beispiel 1 ermittelten Flächen-Wert lediglich 0,35%, was noch deutlich unter dem bereits geringen Messfehler des Beispiels 2 liegt.

Gegenüber den Vergleichsbeispielen 2 bis 4 sind die Abweichungen für den Flächen-Wert in den Beispiele 2 und 3 erheblich geringer, und dies zudem über einen Zeitraum, der mehr als doppelt so lang ist wie die gesamte Messdauer in den Vergleichsbeispielen. Folglich stellt die gepulste amperometrische Detektion eine zuverlässige und reproduzierbare Bestimmung von Dimethyldisulfid in Methansulfonsäure dar.

### IV. Vergleich von Ionenchromatoaraphie und gepulster Amperometrie mit NMR

Nachdem gezeigt wurde, dass die gepulste amperometrische Detektion eine geeignete Methode zur reproduzierbaren und verlässlichen Bestimmung von Dialkyldisulfiden in Alkansulfonsäuren, insbesondere von Dimethyldisulfid in Methansulfonsäure, ist, wurde die Genauigkeit dieser Methode mit der Kernspinresonanz verglichen.

### Beispiel 4:

Es wurde dieselbe instrumentelle Anordnung wie bei der amperometrischen Detektion bei konstanter Spannung verwendet. Als Analyt wurde ein Gemisch aus 3 Tropfen einer Probe aus der Herstellung von Methansulfonsäure durch Oxidation von Dimethyldisulfid in 100 ml eines Gemisches aus Acetonitril und Wasser (30 : 70 Vv) verwendet. Das Injektionsvolumen betrug 20 µl und die Temperatur der Trennsäule befand sich bei ca. 25°C.

| | |
|---|---|
| Eluent: | MeOH : H₂O (3:7) + 4,2 g/l KH₂PO₄ + 0,2 g/l H₃PO₄ |
| Fluss: | 1,2 ml/min |
| Druck: | 162,3 bar |
| Aufnahmedauer: | 25,0 min |

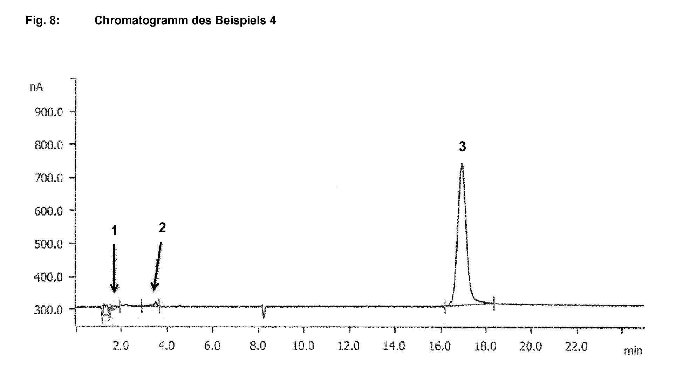

Die im Eluat dieser Ionenchromatographie bestimmten Komponenten sind in der Tabelle 8 aufgelistet und das Chromatogramm dieser Bestimmung ist in Abbildung 8 dargestellt. Die Nummer der Peaks in dieser Tabelle stimmt mit den entsprechend bezifferten Peaks im Chromatogramm der Abbildung 8 überein.

**Tabelle 8: Ergebnisse der Bestimmung in Beispiel 5**

| **Peak-Nr.** | **Retentionszeit [min]** | **Fläche (nA) * min** | **Höhe [nA]** | **Konzentration [Gew.-%]** | **Komponente** |
|---|---|---|---|---|---|
| 1 | 1,686 | 2,3189 | 8,449 | - | MSA |
| 2 | 3,510 | 2,5620 | 12,960 | - | Nitrat |
| 3 | 15,926 | 190,6092 | 430,759 | 2,567 | DMDS |

### Vergleichsbeispiel 5:

Dimethyldisulfid in Methansulfonsäure wurde auch mittels der Kernspinresonanz bestimmt. Der für diese Bestimmung verwendete Analyst setzt sich aus 26,95 mg einer Probe aus der Herstellung von Methansulfonsäure durch Oxidation von Dimethyldisulfid und 39,16 mg Naphthalin zusammen, wobei die letztgenannte Verbindung auf Grund ihres inerten Verhaltens gegenüber Dimethyldisulfid und Methansulfonsäure als Lösungsmittel dient. Die Kernspinresonanz-Messung wurde mit einem 600 MHz-Spektrometer Bruker Avance (III) der Firma Bruker Niospin, ausgerüstet mit einem 600 MHz-Magnetsystem Bruker Ascend der Firma Bruker Biospin und einem Prodigy cryo probe Probenkopf sowie unter Verwendung von MeOD als deuteriertem Lösungsmittel durchgeführt. Die Messdauer betrug 20 Minuten.

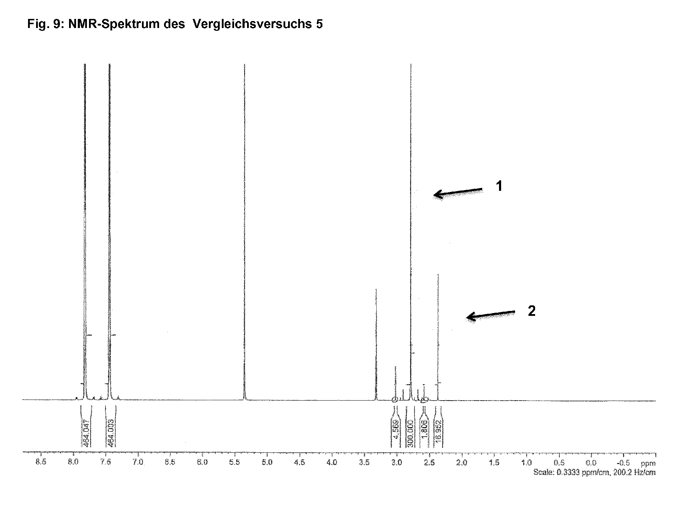

Das Protonenspektrum dieser Messung ist in Abbildung 9 dargestellt und die aus diesem Spektrum gewonnen Ergebnisse sind in der Tabelle 9 zusammengefasst.

Die Kernspinresonanz erlaubt die Bestimmung von Dimethyldisulfid mit einer Genauigkeit von einer Nachkommastelle bzw. 0,1 Gew.-%, während die gepulste amperometrische Detektion eine Bestimmung von Dimethyldisulfid bis auf drei Nachkommastellen bzw. 0,001 Gew.-% ermöglicht, was eine um den Faktor 100 größere Präzision darstellt.

Die in den Beispielen 1 bis 5 und im Vergleichsbeispiel 5 bestimmte Dimethyldisulfid-Konzentration bezieht sich immer auf die Konzentration dieser Komponente im jeweiligen Analyt. Da dieser Analyt aber eine Verdünnung der Probe aus der Methansulfonsäure-Herstellung darstellt, ist die tatsächliche Konzentration des Dimethyldisulfids in dieser Probe um den Faktor der Verdünnung höher. Folglich machen sich bei konzentrierteren Proben die Unterschiede zwischen NMR-Analytik und gepulster amperometrische Detektion stärker bemerkbar. Auf Grund ihrer gegenüber der NMR-Analytik um den Faktor 100 besseren Nachweisgrenze ist die gepulste amperometrische Detektion daher die Methode der Wahl zur Bestimmung eines Dialkyldisulfids in einer Alkansulfonsäure.

**Tabelle 9: Ergebnisse der Bestimmung in Vergleichsbeispiel 5**

| **Peak-Nr.** | **Komponente** | **Integral** | **Teiler** | **korrigiertes Integral** | **Verhältnis [Mol-%]** | **Stoffmenge [mMol]** | **molare Masse [g/mol]** | **Masse [mg]** | **Gehalt [Gew.-%]** |
|---|---|---|---|---|---|---|---|---|---|
| | Naphthalin | 464,047 | 4 | 116,012 | 53,0 | | 128,16 | 39,07 | --- |
| | | | | | | 0,305 | | | |
| 1 | MSA | 300,000 | 3 | 100,000 | 45,7 | 0,263 | 96,11 | 25,26 | 93,7 |
| 2 | DMDS | 16,952 | 6 | 2,825 | 1,3 | 0,007 | 94,20 | 0,70 | 2,6 |

### V. Vergleich des gepulsten amperometrischen Detektors mit einem UV-Deterktor

Die höhere Empfindlichkeit des (gepulsten) amperometrischen Detektors für ein Dialkyldisulfid in einer Alkansulfonsäure wurde durch eine Messreihe mit einer Verdünnungsreihe von Dimethyldisulfid in Methansulfonsäure gezeigt.

### 1. Probenvorbereitung:

Die Proben setzen sich aus den Einwaagen gemäß der Tabelle 10 zusammen, die auf einer Analysenwaage mit vier Nachkommastellen eingewogen wurden. Für eine Kalibrierung im ppm-Bereich wurde ein Tropfen der Probe auf 100 g Reinstwasser eingewogen. Eine flüssige Probe wurde in ein Probenfläschchen (Rotilabor) mit einem Volumen von 4 ml gegeben und im Anschluss mit einer Schraubkappe mitsamt Dichtung verschlossen. Die Probe wurde dann in das Probenrack des 858 Professional Sample Processors gestellt. Die weitere Verdünnung der Probe wurde mit dem Probensampler vorgenommen. Dies erfolgt in einem Mischbehälter mit Magnetrührer, wobei die Probe wird auf ein Verhältnis von 1:100 verdünnt wird. Im Anschluss wurde die Probe in eine oder mehrere Probenschleifen unterschiedlicher Länge gepumpt. Bei einem lonenchromatograph 882 Compact IC plus, der mit einer Säule des Typs Gemini 5U C6-Phenyl 110A 250/4.6 ausgestattet ist, weist die Probenschleife eine Länge von 20 µl. Danach folgten Reinigungsschritte des Mischungsbehälters für die nächste Analyse.

### 2. Abweichungen/Fehler:

Eine Abweichung von ca. 2 % ist im Rahmen der Genauigkeit Ionenchromatographie. Für die Bestimmung von Dimethyldisulfid sind Kalibrierungen in der Größenordnung von 50 ppm möglich, und für Methylmethanthiosulfonat (MMTS) sind Kalibrierungen in der Größenordnung von 100 ppm möglich. Bei noch niedrigeren Konzentrationen werden die Fehler deutlich größer als die akzeptable Abweichung von 2 %.

### 3. Ergebnisse

Es wurde ein lonenchromatograph 882 Compact IC plus (Nr. 2.850.9110 von Metrohm) verwendet, der ausgestattet ist mit einem UV/VIS Detektor Vario 944 (Nr. 2.944.0010 von Metrohm), einem IC Amperometrischen Detektor (Nr. 2.850.9110 von Metrohm) und einer Druckanzeige, die dazu dient einen konstanten Druck bei der Spektrenaufnahme nachverfolgen zu können.

Es wurden 4 Versuche mit den in der Tabelle 10 angegebenen Eingaben für die jeweiligen Analyten durchgeführt.

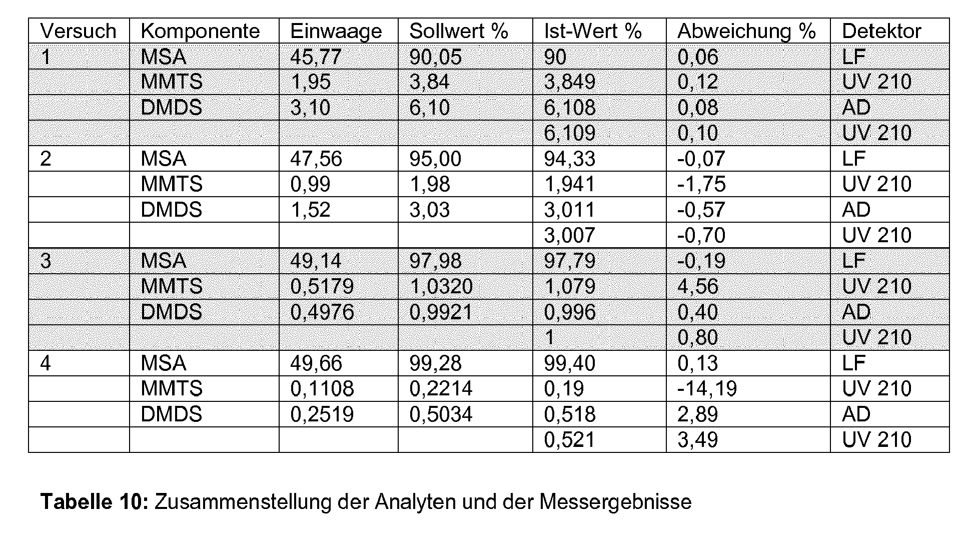

Die in der Tabelle 10 zusammengefassten Messergebnisse zeigen, dass ein (gepulster) amperometrischer Detektor einem UV/VIS-Spektrometer bezüglich der Genauigkeit in der Bestimmung von Dimethyldisulfid überlegen ist. Diese höhere Genauigkeit der Amperometrie in der Bestimmung von Dimethyldisulfid nimmt mit zunehmender Verdünnung des Dimethyldisulfids in der Methansulfonsäure sogar noch weiter zu.

## Patentansprüche

1. Verfahren zur Bestimmung eines Dialkyldisulfids, umfassend die Schritte
a) Durchführen einer chromatographischen Trennung eines Analyten, der mindestens ein Dialkyldisulfid und eine Alkansulfonsäure enthält, und
b) Bestimmen des Dialkyldisulfids mittels gepulster amperometrischer Detektion.

2. Verfahren gemäß Anspruch 1, wobei der Schritt Bestimmen des Dialkyldisulfids mittels gepulster amperometrischer Detektion folgende Einzelschritte umfasst
b1) Messen des Elektrolysestroms für das Dialkyldisulfid mittels gepulster amperometrischer Detektion, und
b2) Ermitteln der Menge und/oder der Konzentration des zu bestimmenden Dialkyldisulfids durch Vergleich mit einer zuvor für das zu bestimmende Dialkyldisulfid erstellten Kalibrierfunktion.

3. Verfahren gemäß Anspruch 1 oder 2, wobei die gepulste amperometrische Detektion im oxidativen Modus durchgeführt wird.

4. Verfahren gemäß einem beliebigen der Ansprüche 1 bis 3, wobei in der gepulsten amperometrischen Detektion eine Glaskohlenstoffelektrode als Arbeitselektrode verwendet wird.

5. Verfahren gemäß einem beliebigen der Ansprüche 1 bis 4, wobei in der gepulsten amperometrischen Detektion eine Silber-Silberchlorid-Elektrode oder Palladiumelektrode als Referenzelektrode eingesetzt wird.

6. Verfahren gemäß einem beliebigen der Ansprüche 1 bis 5, wobei die gepulste amperometrische Detektion mindestens drei Potentialprofile umfasst.

7. Verfahren gemäß Anspruch 6, wobei die gepulste amperometrische Detektion daher mindestens ein Oxidationspotential, mindestens ein Reinigungspotential und mindestens ein Konditionierungspotential umfasst.

8. Verfahren gemäß Anspruch 7, wobei das Oxidationspotential einen Wert von ca. + 0,5 V bis ca. + 1,3 V hat, das Reinigungspotential einen Wert von mindestens ca. + 1,3 V und das Konditionierungspotential einen Wert von ca. - 0,5 V bis ca. + 0,5 V.

9. Verfahren gemäß Anspruch 7 oder 8, wobei das Oxidationspotential einen Wert von ca. + 0,8 V bis ca. 1,2 V hat, das Reinigungspotential einen Wert von mindestens ca. + 1,5 V und das Konditionierungspotential einen Wert von ca. - 0, 3 V bis ca. + 0,3 V.

10. Verfahren gemäß einem beliebigen der Ansprüche 7 bis 9, wobei die Dauer des Oxidationspotentials mindestens ca. 60 ms beträgt, die Dauer des Reinigungspotentials mindestens ca. 10 ms und die Dauer des Reinigungspotentials mindestens ca. 40 ms.

11. Verfahren gemäß einem beliebigen der Ansprüche 1 bis 10, wobei die Messdauer ein ganzzahliges Vielfaches von 16,7 ms beträgt.

12. Verfahren gemäß Anspruch 10 oder 11, wobei die Dauer des Oxidationspotentials mindestens ca. 300 ms beträgt.

13. Verfahren gemäß einem beliebigen der Ansprüche 1 bis 12, wobei die chromatographische Trennung als Umkehrphasen-Chromatographie (reversed phase chromatography) durchgeführt wird.

14. Verfahren gemäß Anspruch 13, wobei die chromatographische Trennung als Ionenchromatographie durchgeführt wird.

15. Verfahren gemäß einem beliebigen der Ansprüche 1 bis 14, zusätzlich umfassend den der Bestimmung des Dialkyldisulfids vorangehenden Schritt des Bereitstellens eines Analyten durch Lösen einer Probe, die ein Dialkyldisulfid und eine Alkansulfonsäure enthält, in einem protischen Lösungsmittel oder einem Gemisch aus protischen Lösungsmitteln.
